# EUROPÄISCHE PATENTSCHRIFT

(11) **EP 3 194 333 B1**
(45) Veröffentlichungstag und Bekanntmachung des Hinweises auf die Patenterteilung: **18.07.2018**
(21) Anmeldenummer: 15754117.8
(22) Anmeldetag: 13.08.2015
(51) Int. Cl.: C01B 3/24, C01B 3/28, C01B 32/40, C10J 3/00, C01B 3/34

(54) **VERFAHREN ZUR ERZEUGUNG VON SYNTHESEGAS**
METHOD FOR PRODUCING SYNTHESIS GAS
PROCÉDÉ DE FABRICATION D'UN GAZ DE SYNTHÈSE

(30) Priorität: 19.08.2014 EP 14002872
(43) Veröffentlichungstag der Anmeldung: 26.07.2017
(73) Patentinhaber: BASF SE, 67056 Ludwigshafen am Rhein (DE)
(72) Erfinder: MAASS, Hans-Jürgen, 01328 Dresden (DE); MACHHAMMER, Otto, 68219 Mannheim (DE); BODE, Andreas, 68163 Mannheim (DE); KOLIOS, Grigorios, 67435 Neustadt (DE)
(74) Vertreter: BASF IP Association
(86) Internationale Anmeldenummer: PCT/EP2015/001675
(87) Internationale Veröffentlichungsnummer: WO 2016/026562

(56) Entgegenhaltungen:
- WO-A1-2014/097142
- DE-A1-102011 106 642
- DE-A1-102011 106 645
- DE-A1-102013 021 418
- DE-T5-112010 003 184
- HAGHIGHI ET AL: "On the reaction mechanism of CO2 reforming of methane over a bed of coal char", PROCEEDINGS OF THE COMBUSTION INSTITUTE, ELSEVIER, NL, Bd. 31, Nr. 2, 28. Dezember 2006 (2006-12-28), Seiten 1983-1990, XP005817861, ISSN: 1540-7489, DOI: 10.1016/J.PROCI.2006.07.029

## Beschreibung

Die Erfindung betrifft ein Verfahren zur Erzeugung von Synthesegas, bei dem Kohlenwasserstoff in einer ersten Reaktionszone thermisch in Wasserstoff und Kohlenstoff zersetzt und dabei entstehender Wasserstoff aus der ersten Reaktionszone in eine zweite Reaktionszone geleitet wird, um dort mit Kohlendioxid durch Reverse Wassergas-Shift zu Wasser und Kohlenmonoxid umgesetzt zu werden.

Unter Synthesegas ist ein Wasserstoff und Kohlenmonoxid enthaltendes Stoffgemisch zu verstehen, das in einer Vielzahl von industriellen Prozessen als Basischemikalie eingesetzt werden kann. Beispielsweise wird Synthesegas zur Produktion von Methanol, Dimethylether oder Kohlenwasserstoffen verwendet.

Ein Verfahren der gattungsgemäßen Art ist aus der Patentanmeldung WO2014097142 bekannt. In der Anmeldung wird vorgeschlagen, den in der ersten Reaktionszone gebildeten Wasserstoff mit einer zwischen 800 und 1400°C liegenden Temperatur in die zweite Reaktionszone zu leiten, um seinen Wärmeinhalt für die Umsetzung von Wasserstoff und Kohlendioxid zu Wasser und Kohlenmonoxid zu nutzen.

Aus dem Stand der Technik ist zudem die Patentanmeldung DE112010003184 bekannt. In dieser wird ein Verfahren vorgestellt, welches zuerst die Vergasung von kohlenstoffhaltigem Material hin zu Methan und anschließend eine thermische oder katalytische Zersetzung des Methans und die Umwandlung von Kohlenstoffdioxid beinhaltet. Der bei der thermischen Zersetzung entstehende Kohlenstoff wird wiederum der katalytischen Vergasung zugeführt. Die notwendige Wärme für die thermische oder katalytische Zersetzung von Methan wird über die Verbrennung von Kohlenstoff bereitgestellt. Die Patentanmeldung gibt jedoch nicht an, wie die Wärme zwischen den verschiedenen Reaktionsschritten ausgetauscht wird.

Aufgabe der vorliegenden Erfindung ist es, ein Verfahren der eingangs angegebenen Art anzugeben, mit dem die Synthesegaserzeugung besser kontrolliert und mit einem höheren Maß an Wärmeintegration durchgeführt werden kann.

Diese Aufgabe wird dadurch gelöst, dass für die thermische Zersetzung des Kohlenwasserstoffs benötigte Energie der ersten Reaktionszone aus der zweiten Reaktionszone zugeführt wird.

Das erfindungsgemäße Verfahren erlaubt es, die in der ersten Reaktionszone ablaufende thermische Kohlenwasserstoffzersetzung weitgehend unabhängig von anderen Reaktionen durchzuführen und damit vergleichsweise einfach und gut zu kontrollieren. In erster Linie über die Temperatur kann beispielsweise das Verhältnis von zersetztem zu nicht zersetztem Kohlenwasserstoff eingestellt und damit vor allem die Menge des in der ersten Reaktionszone erzeugten Wasserstoffs gesteuert werden. So wird in Gegenwart von Kohlenstoff bei einer Temperatur von ca. 800°C nur etwa die Hälfte des eingesetzten Kohlenwasserstoffs zersetzt, während bei ca. 1200°C ein Vollumsatz stattfindet.

Um Wasserstoff mit Kohlendioxid durch Reverse Wassergas-Shift in Wasser und Kohlenmonoxid umzusetzen, sind höhere Temperaturen notwendig, als für die thermische Kohlenwasserstoffzersetzung, so dass zwischen der zweiten und der ersten Reaktionszone ein Temperaturgefälle eingestellt wird, das zweckmäßigerweise dazu genutzt wird, um der ersten Reaktionszone für die thermische Kohlenwasserstoffzersetzung benötigte Energie in Form von Wärme zuzuführen. Vorzugsweise wird der ersten Reaktionszone die gesamte für die thermische Kohlenwasserstoffzersetzung benötigte Energie aus der zweiten Reaktionszone zugeführt.

Der Kohlenwasserstoff, bei dem es sich beispielsweise um Methan, Ethan, Propan oder Butan handelt, wird der Kohlenwasserstoffzersetzung vorteilhaft in Form eines kohlenwasserstoffhaltigen Gases zugeführt. Vorzugsweise wird als kohlenwasserstoffhaltiges Gas Erdgas verwendet, dessen Methangehalt in Abhängigkeit von der Erdgaslagerstätte und der Art der Aufbereitung typischerweise zwischen 75 und 99mol% liegt.

Die erfindungsgemäße Synthesegaserzeugung kann drucklos oder unter Druck durchgeführt werden. Vorzugsweise erfolgt sie bei Drücken zwischen 10 und 25bar, besonders bevorzugt - bis auf Druckverluste - bei dem höchsten Druck, unter dem ein Kohlenwasserstoffe enthaltender Einsatz für die Kohlenstoffgewinnung zur Verfügung steht. Dies kann beispielsweise der Druck sein, unter dem Erdgas aus einem Erdgasnetz als Einsatz bezogen werden kann.

Eine bevorzugte Ausgestaltung des erfindungsgemäßen Verfahrens sieht vor, dass für seine Durchführung erforderliche thermische Energie durch Oxidation oder partielle Oxidation eines Brennstoffs erzeugt wird, der Kohlenwasserstoffe und/oder Wasserstoff und/oder Kohlenstoff umfasst. Als Oxidationsmittel wird vorzugsweise Luft und/oder mit Sauerstoff angereicherte Luft und/oder technisch reiner Sauerstoff verwendet. Oxidation und partielle Oxidation können außerhalb der Reaktionszonen durchgeführt werden, wozu der Brennstoff mit einem Oxidationsmittel gemischt und zur Reaktion gebracht wird. Das dabei entstehende heiße Gas wird nachfolgend in die erste und/oder die zweite Reaktionszone eingeleitet, wobei es einen Teil seiner fühlbaren Wärme direkt oder indirekt an die umzusetzenden Stoffe abgibt. Das Oxidationsmittel kann jedoch auch in eine Reaktionszone eingeleitet, dort mit einem vorliegenden Brennstoff, bei dem es sich um durch die Kohlenwasserstoffzersetzung in der ersten Reaktionszone erhaltenen Wasserstoff und/oder Kohlenstoff handeln kann, vermischt und zur Reaktion gebracht werden. Vorzugsweise wird das Oxidationsmittel ausschließlich der zweiten Reaktionszone zugeführt, wobei für die Reverse Wassergas-Shift benötigtes Kohlendioxid dem Oxidationsmittel stromaufwärts der zweiten Reaktionszone zugemischt werden kann.

Alternativ oder zusätzlich zu den beschriebenen oxidativen Methoden kann thermische Energie auch über elektrischen Strom erzeugt und für die erfindungsgemäße Synthesegaserzeugung bereitgestellt werden. Hierzu können beispielsweise ein oder mehrere elektrisch leitfähige Heizelemente so in einer Reaktionszone angeordnet sein, dass sie mit den umzusetzenden Stoffen direkt oder indirekt in thermische Verbindung treten. Ein elektrisch leitfähiges Heizelement ist entweder fest oder beweglich innerhalb der Reaktionszone angeordnet. Beispielsweise kann das Heizelement Teil eines Wander- oder Wirbelbetts aus einem granularen, elektrisch leitfähigen Feststoff, bei dem es sich beispielsweise um Kohlenstoff handelt, sein, das durch die Reaktionszone bewegt wird.

Um es zu erhitzen, wird ein elektrisch leitfähiges Heizelement mit einer Stromquelle verbunden, über die elektrischer Strom durch das Heizelement geleitet wird. Möglich ist es aber auch, Wärme durch elektromagnetische Induktion zu erzeugen. Hierzu wird außerhalb der beiden Reaktionszonen eine Induktionsspule angeordnet, die ein magnetisches Wechselfeld liefert, sobald eine elektrische Wechselspannung an sie angelegt wird. Ein elektrisch leitfähiges Heizelement, das von der Induktionsspule elektrisch isoliert ist, wird so angeordnet, dass in ihm durch das magnetische Wechselfeld Wirbelströme induziert werden können, die aufgrund der ohmschen Verluste zur Erwärmung des Heizelements führen. Besteht das Heizelement aus einem ferromagnetischen Material, wie beispielsweise einer Eisen-Silizium- oder einer Eisen-Nickel-Legierung oder µ-Metall, so tragen darüber hinaus Ummagnetisierungsverluste zur Erwärmung des Heizelements und damit zur Ausbildung eines Temperaturgradienten zwischen einem Heizelement und seiner Umgebung bei.

Abhängig von den Reaktionsbedingungen wird bei der Durchführung des erfindungsgemäßen Verfahrens nur ein Teil des Kohlenwasserstoffs in der ersten Reaktionszone zu Wasserstoff und Kohlenstoff zersetzt, wodurch nicht oder nicht vollständig zersetzter Kohlenwasserstoff aus der ersten Reaktionszone abgezogen werden kann. Eine besonders bevorzugte Ausgestaltung des erfindungsgemäßen Verfahrens sieht vor, nicht oder nicht vollständig zersetzten Kohlenwasserstoff aus der ersten in die zweite Reaktionszone zu leiten und dort durch Dampfreformierung mit Wasser zu Wasserstoff und Kohlendioxid umzusetzen. Zweckmäßigerweise handelt es sich bei dem für die Umsetzung benötigten Wasser um Wasser, das in der zweiten Reaktionszone durch die Reaktion von Wasserstoff mit Sauerstoff und/oder Kohlendioxid gewonnen wird. Eine Wasserzuführung von außerhalb soll jedoch nicht ausgeschlossen sein.

Eine zweckmäßige Ausgestaltung des erfindungsgemäßen Verfahrens sieht vor, dass die thermische Kohlenwasserstoffzersetzung in Gegenwart eines granularen Feststoffs durchgeführt wird. Unter dieser Bedingung stellt in der ersten Reaktionszone gebildeter Kohlenstoff kein Problem dar, da er sich auf dem granularen Feststoff ablagert und gegebenenfalls gemeinsam mit diesem aus der ersten Reaktionszone entfernt werden kann. Der granulare Feststoff wirkt als Filter, so dass insbesondere entstehender Wasserstoff, aber auch andere Gase, weitgehend frei von Kohlenstoffpartikeln aus der ersten Reaktionszone abgezogen und beispielsweise in die zweite Reaktionszone geführt werden können. Kohlenstoff, der trotz der beschriebenen Filterwirkung in die zweite Reaktionszone gelangt, reagiert mit dem dort vorhandenen Sauerstoff zu einem Kohlenstoffoxid, das direkt oder nach Reverser Wassergas-Shift einen Teil des Synthesegases bildet.

Vorzugsweise wird der granulare Feststoff als Wanderbett durch die erste Reaktionszone geführt, wobei der umzusetzende Kohlenwasserstoff zweckmäßigerweise im Gegenstrom zum Granulat geleitet wird. Die erste Reaktionszone ist hierfür sinnvollerweise in einem als senkrechter Schacht ausgeführten Reaktionsraum angeordnet, so dass die Bewegung des Wanderbetts alleine unter Wirkung der Schwerkraft zustande kommt. Der granulare Feststoff kann jedoch auch als Wirbelbett durch die erste Reaktionszone geführt werden. Beide Varianten erlauben eine kontinuierliche oder quasi-kontinuierliche Betriebsweise.

Vorteilhafterweise werden auch die in der zweiten Reaktionszone ablaufenden Reaktionen in Gegenwart eines granularen Feststoffs durchgeführt, der vorzugsweise als Wanderbett durch die Reaktionszone geführt wird. Bevorzugt werden die erste und die zweite Reaktionszone über ein aus granularem Feststoff bestehendes Wanderbett verbunden, das beide Reaktionszonen vollständig umfasst und das sich von der zweiten zur ersten Reaktionszone bewegt. Die beiden Reaktionszonen sind hierfür sinnvollerweise gemeinsam in einem als senkrechter Schacht ausgeführten Reaktionsraum übereinander angeordnet, so dass die Bewegung des Wanderbetts alleine unter Wirkung der Schwerkraft zustande kommt. Die Verbindung der beiden Reaktionszonen über das Wanderbett erlaubt es, den granularen Feststoff als Wärmeträger einzusetzen, mit dem Wärme von der zweiten in die erste Reaktionszone transportiert wird.

Wird der granulare Feststoff als Wanderbett durch die beiden Reaktionszonen geführt, so sieht eine weitere bevorzugte Variante des erfindungsgemäßen Verfahrens vor, dass der Feststoff mit Umgebungstemperatur in den Reaktionsraum eingeleitet, dort zunächst bis auf die Maximaltemperatur der zweiten Reaktionszone aufgeheizt und anschließend in die erste Reaktionszone überführt wird, wo er einen Teil seiner Wärme für die dort ablaufenden Reaktionen zur Verfügung stellt und dabei abgekühlt wird. Nach dem Verlassen der ersten Reaktionszone erfolgt eine weitere Abkühlung, die zweckmäßig bis in die Nähe der Umgebungstemperatur durchgeführt wird, so dass eine Kühlung bzw. Löschung des aus dem Reaktionsraum abgezogenen granularen Feststoffs nicht erforderlich ist. Zur Ausbildung und Aufrechterhaltung des beschriebenen Temperaturprofils wird vorgeschlagen, ein Kohlenwasserstoff enthaltendes Gasgemisch mit Umgebungstemperatur in den Reaktionsraum einzuleiten und im Gegenstrom durch das Wanderbett zu führen. Auf seinem Weg durch den Reaktionsraum tauscht das Gasgemisch in direktem Kontakt mit dem Wanderbett Wärme aus, wobei das Gasgemisch bis zum Erreichen der ersten Reaktionszone auf mehr als 1200°C aufgeheizt und das Wanderbett gleichzeitig abgekühlt wird. Aus der ersten Reaktionszone abströmendes Gas wird weiter im Gegenstrom durch das Wanderbett zur zweiten Reaktionszone geführt und in direktem Wärmetausch mit diesem aufgeheizt. Die aus der zweiten Reaktionszone abströmenden heißen Gase werden in direktem Wärmetausch gegen das Wanderbett abgekühlt, so dass sie mit einer Temperatur zwischen 50 und 500°C aus dem Reaktionsraum abgezogen werden können.

Zur Durchführung des erfindungsgemäßen Verfahrens kann als granularer Feststoff ein aus Korund (Al₂O₃) oder Quarzglas (SiO₂) oder Mullit (Al₂O₃·SiO₂) oder Cordierit ((Mg,Fe)₂(Al₂Si)[Al₂Si₄O₁₈]) oder Steatit (SiO₂·MgO·Al₂O₃) bestehendes Granulat eingesetzt werden. Vorzugsweise wird jedoch ein kohlenstoffreiches Granulat eingesetzt, das aus festen, ganz oder zum überwiegenden Teil aus Kohlenstoff, bestehenden Körnern gebildet ist, die mindestens 50 Gew.-%, bevorzugt mindestens 80 Gew.-%, weiter bevorzugt mindestens 90 Gew.-% Kohlenstoff, weiter bevorzugt mindestens 95 Gew.-%, insbesondere mindestens 98 Gew.-% Kohlenstoff aufweisen.

Die Körner liegen vorteilhaft, mit einem Äquivalenzdurchmesser, der durch Siebung mit einer bestimmten Maschengröße bestimmbar ist, von 0,05 bis 100 mm, bevorzugt von 0,05 bis 50 mm, weiter bevorzugt 0,05 bis 10 mm, weiter bevorzugt 0,1 bis 3 mm, weiter bevorzugt 0,2 bis 2 mm, insbesondere 0,3 bis 1 mm, vor.

Vorteilhaft beträgt die Dichte des granulären Feststoffes 0,15 bis 2,25 g/ml, bevorzugt 0,3 bis 2 g/ml, weiter bevorzugt 0,65 bis 1,85 g/ml, insbesondere 0,9 bis 1,7 g/ml.

Vorteilhaft beträgt die Porosität des granulären Feststoffes 0 bis 0,95 ml/ml, bevorzugt 0,1 bis 0,85 ml/ml, weiter bevorzugt 0,15 bis 0,7 ml/ml, insbesondere 0,25 bis 0,6 ml/ml.

Vorteilhaft weist der granulare Feststoff eine Makroporosität auf. Der mittlere Porenradius liegt vorteilhaft bei 0,01 bis 50 µm, bevorzugt bei 0,1 bis 20 µm, insbesondere bei 0,5 bis 5 µm. Die spezifische Oberfläche liegt vorteilhaft bei 0,02 bis 100 m²/g, bevorzugt bei 0,05 bis 10 m²/g, insbesondere bei 0,2 bis 2 m²/g.

Der granulare Feststoff ist vorteilhaft kugelförmig. In dem erfindungsgemäßen Verfahren kann eine Vielzahl von unterschiedlichen kohlenstoffhaltigen Granulaten eingesetzt werden. Ein derartiger granularer Feststoff kann beispielsweise überwiegend aus Kohle, Koks, Koksgrus und/oder Mischungen hieraus bestehen. Ferner kann das kohlenstoffhaltige Granulat 0 bis 15 Gew.-% bezogen auf die Gesamtmasse des Granulats, bevorzugt 0 bis 5 Gew.-%, Metall, Metalloxid und/oder Keramik enthalten. Ein derartiges Granulat kann ferner beispielsweise ganz oder teilweise aus Koksgrus bestehen, der sich aufgrund seiner kleinen Körnung nicht für den Einsatz im Hochofen eignet. Vorstellbar sind aber auch Granulate, die ganz oder teilweise aus geringwertigem Kokereikoks auf Braun- oder Steinkohlebasis und/oder aus Koks bestehen, der aus Biomasse gewonnen wird. Vorzugsweise besteht das Granulat aus Kohlenstoff, der im Verfahren durch thermische Kohlenwasserstoffzersetzung erzeugt und im Kreislauf geführt wird.

Unter "Koks" wird in der vorliegenden Erfindung ein poröser Brennstoff mit hohem Kohlenstoffgehalt (C-Massenanteil > 85%) verstanden.

Bevorzugt wird das erfindungsgemäße Verfahren ohne Einsatz eines aktivmetallhaltigen Katalysators durchgeführt.

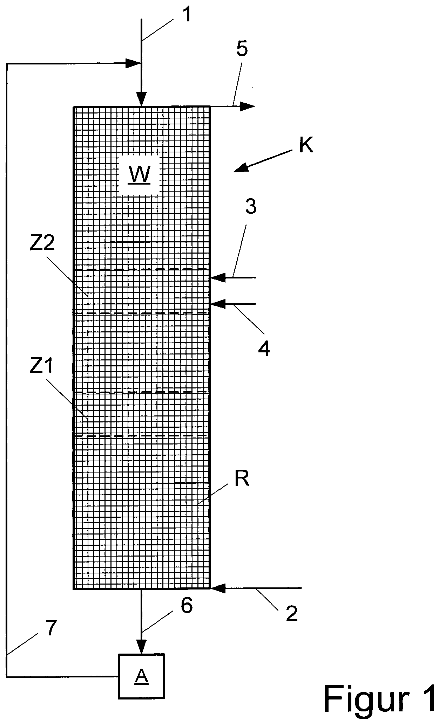

Im Folgenden soll die Erfindung anhand eines in der **Figur 1** schematisch dargestellten Ausführungsbeispiels näher erläutert werden.

Die Figur 1 zeigt eine bevorzugte Ausgestaltung des erfindungsgemäßen Verfahrens, bei der ein Reaktor eingesetzt wird, durch dessen Reaktionsraum ein Wanderbett aus einem granularen Feststoff geführt wird, das eine erste und eine zweite Reaktionszone umfasst.

Über die Zuführung 1 wird ein granularer Feststoff, bei dem es sich beispielsweise um im Verfahren durch thermische Kohlenwasserstoffzersetzung erzeugten Kohlenstoff handelt, mit Umgebungstemperatur von oben in den Reaktionsraum R des Reaktors K eingeleitet, durch den es nachfolgend unter Wirkung der Schwerkraft in einem Wanderbett W nach unten geführt wird. Ein Kohlenwasserstoff enthaltendes Einsatzgas 2, bei dem es sich vorzugsweise um Erdgas handelt, wird gleichzeitig von unten in den Reaktionsraum R geleitet und im Gegenstrom durch das Wanderbett W nach oben geführt. Das Gas 2, das bei seinem Eintritt in den Reaktionsraum R Umgebungstemperatur aufweist, wird auf seinem Weg nach oben in direktem Wärmetausch mit dem Wanderbett W aufgeheizt, bis es in der ersten Reaktionszone Z1 die Zersetzungstemperatur des Kohlenwasserstoffs erreicht, der unter diesen Bedingungen in einer endothermen Reaktion in Wasserstoff und Kohlenstoff zerfällt. Der hierbei gebildete Kohlenstoff lagert sich zum überwiegenden Teil an den granularen Feststoff des Wanderbetts W an. Zusammen mit nicht oder nur zum Teil umgesetztem Kohlenwasserstoff strömt der gebildete heiße Wasserstoff in die oberhalb der ersten angeordnete zweite Reaktionszone Z2, wobei er in direktem Wärmetausch mit dem Wanderbett W weiter aufgeheizt wird. In der zweiten Reaktionszone Z2 wird ein Teil des Wasserstoffs mit Sauerstoff verbrannt, der über Leitung 3 zugeführt wird, und liefert so die für die Synthesegaserzeugung erforderliche Reaktionswärme. Alternativ oder zusätzlich kann die Reaktionswärme auch über elektrischen Strom in die zweite Reaktionszone Z2 eingebracht werden. Zumindest ein Teil des bei der Wasserstoffverbrennung entstehenden Wassers wird mit über Leitung 4 zugeführtem Kohlendioxid zu Wasserstoff und Kohlenmonoxid umgesetzt. Nicht oder nicht vollständig in der ersten Reaktionszone Z1 zersetzter Kohlenwasserstoff wird in der zweiten Reaktionszone Z2 mit Wasser zu Wasserstoff und Kohlenmonoxid reformiert, so dass ein Synthesegas aus der zweiten Reaktionszone Z2 abströmt, das im Gegenstrom zum Wanderbett W abgekühlt und über Leitung 5 mit einer Temperatur von zwischen 50 und 500°C am oberen Ende des Reaktors K abgezogen wird.

Am unteren Ende des Reaktors K wird granularer Feststoff 6 mit einer nahe der Umgebungstemperatur liegenden Temperatur entfernt und einer Aufbereitungseinrichtung A zugeführt, in der beispielsweise durch Entfernen des angelagerten Kohlenstoffs oder durch Zerkleinern, Sichten und Klassieren aufbereitet wird, um über Leitung 7 wieder in den Reaktionsraum R zurückgeführt zu werden.

## Patentansprüche

1. Verfahren zur Erzeugung von Synthesegas (5), bei dem Kohlenwasserstoff (2) in einer ersten Reaktionszone (Z1) thermisch in Wasserstoff und Kohlenstoff zersetzt und dabei entstehender Wasserstoff aus der ersten Reaktionszone (Z1) in eine zweite Reaktionszone (Z2) geleitet wird, um dort mit Kohlendioxid (4) durch Reverse Wassergas-Shift zu Wasser und Kohlenmonoxid umgesetzt zu werden, **dadurch gekennzeichnet, dass** für die thermische Zersetzung des Kohlenwasserstoffs (1) benötigte Energie der ersten Reaktionszone (Z1) aus der zweiten Reaktionszone (Z2) zugeführt wird und zwischen der zweiten Reaktionszone (Z2) und der ersten Reaktionszone (Z1) ein Temperaturgefälle eingestellt wird.

2. Verfahren nach Anspruch 1, **dadurch gekennzeichnet, dass** thermische Energie in der zweiten Reaktionszone (Z2) durch Oxidation von Wasserstoff und/oder durch elektrischen Strom erzeugt wird.

3. Verfahren nach einem der Ansprüche 1 oder 2, **dadurch gekennzeichnet, dass** in der ersten Reaktionszone (Z1) nicht oder nicht vollständig zersetzter Kohlenwasserstoff in die zweite Reaktionszone (Z2) geleitet und dort mit Wasser zu Wasserstoff und Kohlendioxid umgesetzt wird.

4. Verfahren nach einem der Ansprüche 1 bis 3, **dadurch gekennzeichnet, dass** die beiden Reaktionszonen (Z1, Z2) über ein aus granularem Feststoff bestehendes Wanderbett (W) verbunden sind, das sich von der zweiten (Z2) zur ersten Reaktionszone (Z1) bewegt.

5. Verfahren nach Anspruch 4, **dadurch gekennzeichnet, dass** granularer Feststoff in einem Kreislauf gefahren wird.

6. Verfahren nach einem der Ansprüche 4 oder 5, **dadurch gekennzeichnet, dass** aus der zweiten Reaktionszone (Z2) austretendes Gas im Gegenstrom zu dem Wanderbett (W) geführt und dabei in direktem Wärmetausch mit diesem abgekühlt wird.

7. Verfahren nach einem der Ansprüche 4 bis 6, **dadurch gekennzeichnet, dass** der Kohlenwasserstoff (2) im Gegenstrom zu dem Wanderbett (W) in die erste Reaktionszone (Z1) geführt und dabei in direktem Wärmetausch mit diesem aufgeheizt wird.

8. Verfahren nach einem der Ansprüche 4 bis 7, **dadurch gekennzeichnet, dass** auf dem granularen Feststoff abgeschiedener Kohlenstoff stromabwärts der ersten Reaktionszone (Z1) abgetrennt (A) und aus dem Wanderbett (W) entnommen wird.

9. Verfahren nach einem der Ansprüche 1 bis 8, **dadurch gekennzeichnet, dass** als granularer Feststoff Korund (Al₂O₃) oder Quarzglas (SiO₂) oder Mullit (Al₂O₃·SiO₂) oder Cordierit ((Mg,Fe)₂(Al₂Si)[Al₂Si₄O₁₈]) oder Steatit (SiO₂·MgO·Al₂O₃) oder Kohle oder Koks oder im Verfahren durch thermische Kohlenwasserstoffzersetzung erzeugter Kohlenstoff eingesetzt wird.

## Claims

1. Process for producing synthesis gas (5) in which hydrocarbon (2) is decomposed thermally in a first reaction zone (Z1) to hydrogen and carbon, and hydrogen formed is passed from the first reaction zone (Z1) into a second reaction zone (Z2) in order to be reacted therein with carbon dioxide (4) by a reverse water-gas shift to give water and carbon monoxide, **characterized in that** energy required for the thermal decomposition of the hydrocarbon (1) is supplied to the first reaction zone (Z1) from the second reaction zone (Z2) and a temperature gradient is set between the second reaction zone (Z2) and the first reaction zone (Z1).

2. Process according to Claim 1, **characterized in that** thermal energy is generated in the second reaction zone (Z2) by oxidation of hydrogen and/or by means of electrical power.

3. Process according to either of Claims 1 and 2, **characterized in that** hydrocarbon undecomposed or incompletely decomposed in the first reaction zone (Z1) is passed into the second reaction zone (Z2) and reacted therein with water to give hydrogen and carbon dioxide.

4. Process according to any of Claims 1 to 3, **characterized in that** the two reaction zones (Z1, Z2) are connected by means of a moving bed (W) which consists of solid granular material and moves from the second reaction zone (Z2) to the first (Z1).

5. Process according to Claim 4, **characterized in that** solid granular material is circulated.

6. Process according to either of Claims 4 and 5, **characterized in that** gas leaving the second reaction zone (Z2) is conducted in countercurrent to the moving bed (W) and is cooled in direct heat exchange therewith.

7. Process according to any of Claims 4 to 6, **characterized in that** the hydrocarbon (2) is conducted into the first reaction zone (Z1) in countercurrent to the moving bed (W) and is heated in direct heat exchange therewith.

8. Process according to any of Claims 4 to 7, **characterized in that** carbon deposited on the solid granular material is removed (A) downstream of the first reaction zone (Z1) and withdrawn from the moving bed (W).

9. Process according to any of Claims 1 to 8, **characterized in that** the solid granular material used is corundum (Al₂O₃) or quartz glass (SiO₂) or mullite (Al₂O₃·SiO₂) or cordierite ((Mg,Fe)₂(Al₂Si)[Al₂Si₄O₁₈]) or steatite (SiO₂·MgO·Al₂O₃) or coal or coke or carbon produced in the process by thermal hydrocarbon decomposition.

## Revendications

1. Procédé de génération d'un gaz de synthèse (5), selon lequel un hydrocarbure (2) est décomposé thermiquement en hydrogène et carbone dans une première zone de réaction (Z1), et l'hydrogène ainsi formé est conduit depuis la première zone de réaction (Z1) dans une deuxième zone de réaction (Z2), afin d'y être mis en réaction avec du dioxyde de carbone (4) par conversion du gaz à l'eau inverse en eau et monoxyde de carbone, **caractérisé en ce que** l'énergie nécessaire pour la décomposition thermique de l'hydrocarbure (1) est introduite dans la première zone de réaction (Z1) à partir de la deuxième zone de réaction (Z2), et un gradient de température est ajusté entre la deuxième zone de réaction (Z2) et la première zone de réaction (Z1).

2. Procédé selon la revendication 1, **caractérisé en ce que** de l'énergie thermique est générée dans la deuxième zone de réaction (Z2) par oxydation d'hydrogène et/ou par un courant électrique.

3. Procédé selon l'une quelconque des revendications 1 ou 2, **caractérisé en ce que** l'hydrocarbure non ou non entièrement décomposé dans la première zone de réaction (Z1) est conduit dans la deuxième zone de réaction (Z2) et y est mis en réaction avec de l'eau pour former de l'hydrogène et du dioxyde de carbone.

4. Procédé selon l'une quelconque des revendications 1 à 3, **caractérisé en ce que** les deux zones de réaction (Z1, Z2) sont reliées par un lit mobile (W) constitué par un solide granulaire, qui se déplace de la deuxième (Z2) vers la première zone de réaction (Z1).

5. Procédé selon la revendication 4, **caractérisé en ce que** le solide granulaire est mis en circulation dans un circuit.

6. Procédé selon l'une quelconque des revendications 4 ou 5, **caractérisé en ce que** le gaz sortant de la deuxième zone de réaction (Z2) est mis en circulation à contre-courant du lit mobile (W) et ainsi refroidi par échange de chaleur direct avec celui-ci.

7. Procédé selon l'une quelconque des revendications 4 à 6, **caractérisé en ce que** l'hydrocarbure (2) est introduit dans la première zone de réaction (Z1) à contre-courant du lit mobile (W) et ainsi chauffé par échange de chaleur direct avec celui-ci.

8. Procédé selon l'une quelconque des revendications 4 à 7, **caractérisé en ce que** le carbone déposé sur le solide granulaire est séparé (A) en aval de la première zone de réaction (Z1) et extrait du lit mobile (W).

9. Procédé selon l'une quelconque des revendications 1 à 8, **caractérisé en ce que** du corindon (Al₂O₃) ou du verre de quartz (SiO₂) ou de la mullite (Al₂O₃·SiO₂) ou de la cordiérite ((Mg,Fe)₂(Al₂Si)[Al₂Si₄O₁₈]) ou de la stéatite (SiO₂·MgO·Al₂O₃) ou du charbon ou du coke ou du carbone généré dans le procédé par décomposition thermique d'hydrocarbures est utilisé en tant que solide granulaire.
